# EUROPÄISCHE PATENTSCHRIFT

(11) **EP 3 225 433 B1**
(45) Veröffentlichungstag und Bekanntmachung des Hinweises auf die Patenterteilung: **18.07.2018**
(21) Anmeldenummer: 16162855.7
(22) Anmeldetag: 30.03.2016
(51) Int. Cl.: B60D 5/00, B61D 17/20, B62D 47/02

(54) **VERBINDUNGSANORDNUNG ZWISCHEN ZWEI FAHRZEUGTEILEN EINES SCHIENENFAHRZEUGS**
CONNECTION ASSEMBLY BETWEEN TWO VEHICLE PARTS OF A RAIL VEHICLE
SYSTEME DE RACCORDEMENT ENTRE DEUX PARTIES D'UN VEHICULE SUR RAILS

(43) Veröffentlichungstag der Anmeldung: 04.10.2017
(73) Patentinhaber: Hübner GmbH & Co. KG, 34123 Kassel (DE)
(72) Erfinder: RICHTER, Olaf, 34323 Malsfeld Beiseförth (DE); CANKURT, Yasin, 34117 Kassel (DE)
(74) Vertreter: Patentanwälte Walther Hinz Bayer PartGmbB

(56) Entgegenhaltungen:
- EP-A2- 0 380 961
- WO-A1-91/02672
- DE-B- 1 168 945
- DE-B3-102013 218 547

## Beschreibung

Die Erfindung betrifft eine Verbindungsanordnung zur Bildung einer begehbaren Verbindung zwischen zwei gelenkig miteinander verbundenen Fahrzeugteilen eines Gelenkfahrzeugs, insbesondere eines Schienenfahrzeugs. DE102013218547 B3 offenbart eine gattungsgemäße Verbindungsanordnung zur Bildung einer begehbaren Verbindung zwischen gelenkig miteinander verbundenen Fahrzeugteilen. Die EP 2 077 217 B1 offenbart eine Verbindungsanordnung zur Bildung einer begehbaren Verbindung zwischen zwei Fahrzeugteilen eines Schienenfahrzeuges; hierbei dient als zentrales Übergangsbauteil zwischen den beiden Fahrzeugteilen eine Brückenplatte, die länglich ausgeführt ist, wobei die beiden Enden der länglichen Brückenplatte in Führungsplatten geführt sind, die mit den Fahrzeugteilen jeweils in Verbindung stehen. Die Enden der Brückenplatte sind mit Kreisbogenabschnitten ausgeführt und sitzen in Innenkonturabschnitten der Führungsplatten ein. Erfolgt eine Versatzbewegung der beiden Fahrzeugteile quer zur Längserstreckung der Brückenplatte, so können die Kreisbogenabschnitte an den Enden der Brückenplatte in den Innenkonturschnitten der Führungsplatten verdrehen. Ein Versatz der beiden Fahrzeugteile kann folglich mit der Verbindungsanordnung ausgeglichen werden. Nachteilig ist die große Baulänge der Verbindungsanordnung zwischen den beiden Fahrzeugteilen, mit der Folge einer entsprechend großen Baulänge des Balges, was einen solchen Balg teuer macht. Wünschenswert ist folglich eine Verkürzung der Verbindungsanordnung zwischen den beiden Fahrzeugteilen, wobei jedoch die Möglichkeit einer entsprechend großen Versatzbewegung erhalten bleiben sollte.

Aufgabe der Erfindung ist die Bereitstellung einer Verbindungsanordnung zur Bildung einer begehbaren Verbindung zwischen zwei Fahrzeugteilen eines Schienenfahrzeuges, die eine kurze Baulänge aufweist und eine große Versatzbewegung zwischen den beiden Fahrzeugteilen zulässt. Weiterhin sollte die Verbindungsanordnung begehbar sein und einen möglichst einfachen Aufbau aufweisen.

Diese Aufgabe wird ausgehend von einer Verbindungsanordnung gemäß dem Oberbegriff des Anspruches 1 in Verbindung mit den kennzeichnenden Merkmalen gelöst. Vorteilhafte Merkmale und Weiterbildungen der Erfindung ergeben sich aus den Unteransprüchen.

Die Erfindung schließt die technische Lehre ein, dass die erste Drehscheibe mit einem ersten Kreisbogenabschnitt vorgesehen ist und unbeweglich an einem ersten Fahrzeugteil angeordnet ist und wobei eine zweite Drehscheibe vorgesehen ist, die beweglich zwischen dem ersten Kreisbogenabschnitt der ersten Drehscheibe und dem zweiten Fahrzeugteil angeordnet ist, wobei die zweite Drehscheibe einen Innenkonturabschnitt aufweist, in dem der erste Kreisbogenabschnitt einsitzt, sodass die zweite Drehscheibe um den ersten Kreisbogenabschnitt der ersten Drehscheibe herum führbar ist.

Mit der erfindungsgemäßen Ausbildung der Verbindungsanordnung wird eine sehr kurze Baulänge ermöglicht, da am ersten Fahrzeugteil eine erste Drehscheibe angeordnet ist, die im Wesentlichen die Struktur eines Halbkreises aufweist. Die halbkreisförmige Struktur der ersten Drehscheibe kann am ersten Fahrzeugteil so aufgenommen werden, dass ein Teil der ersten Drehscheibe bereits von einem Querträger des ersten Fahrzeugteils untergriffen wird, und insgesamt lediglich mit einem restlichen Teil des Kreisbogenabschnittes über dem ersten Fahrzeugteil hervorsteht.

Die zweite Drehscheibe weist einen Innenkonturabschnitt auf, dessen Scheitelpunkt bei einer geraden Ausrichtung mit dem Scheitelpunkt des ersten Kreisbogenabschnittes der ersten Drehscheibe zusammenfällt, wobei sich in den Innenkonturabschnitt der Kreisbogenabschnitt der ersten Drehscheibe hinein erstreckt. Die beiden Drehscheiben sind somit ineinander geführt, sodass insgesamt eine Gesamt-Baulänge der beiden Drehscheiben in Längsrichtung zwischen den beiden Fahrzeugteilen entsteht, die dem Durchmesser im Wesentlichen lediglich einer Drehscheibe entspricht. Mit anderen Worten weist die Verbindungsanordnung eine Länge auf, die auch etwa der Breite der Verbindungsanordnung entspricht. Damit ist der Vorteil erreicht, dass die Verbindungsanordnung zwischen den beiden Fahrzeugteilen insgesamt sehr kurzbauend ist, aber dennoch eine große seitliche Versatzbewegung der Fahrzeugteile zueinander zulässt.

Der Begriff der Drehscheibe bzw. einer Scheibe beschreibt im Rahmen der vorliegenden Beschreibung einen wenigstens mit einem Teilabschnitt rund und flach ausgebildeten Körper, der einen Kreismittelpunkt aufweist und zumindest über einen Teilabschnitt einen Kreisbogenabschnitt um den Kreismittelpunkt umfasst. Weitere Abschnitte des Umfangs können dabei von einer Kreisbogenform abweichen, beispielsweise mit einer geraden Grundkante unter einem Kreisbogenabschnitt oder mit dem Innenkonturabschnitt.

Nach einer vorteilhaften Weiterbildung der Verbindungsanordnung weist die zweite Drehscheibe einen zweiten Kreisbogenabschnitt auf, wobei der zweite Fahrzeugteil eine Kreisbogenaufnahme umfasst, in dem der zweite Kreisbogenabschnitt aufgenommen ist, derart, dass die zweite Drehscheibe in der Kreisbogenaufnahme drehbar ist. Während die erste Drehscheibe unbeweglich, das heißt starr am ersten Fahrzeugteil aufgenommen ist, kann die zweite Drehscheibe bei einer seitlichen Versatzbewegung der beiden Fahrzeugteile zueinander sowohl über dem ersten Kreisbogenabschnitt verdrehen als auch in der Kreisbogenaufnahme am zweiten Fahrzeugteil verdrehen. Die Verdrehung erfolgt dabei sowohl bei einer seitlichen Versatzbewegung als auch bei einer Kurvenfahrt, wenn die beiden Fahrzeugteile mit ihren Längsachsen unter einem Winkel zueinander stehen. Der Kontakt des ersten Kreisbogenabschnittes der ersten Drehscheibe bleibt mit dem Innenkonturabschnitt der zweiten Drehscheibe auch bei einer Verdrehung der beiden Drehscheiben zueinander erhalten, ebenfalls sitzt der zweite Kreisbogenabschnitt der zweiten Drehscheibe unabhängig von der Verdrehung der Drehscheibe in der Kreisbogenaufnahme des zweiten Fahrzeugteils ein.

Vorteilhaft ist unterhalb der ersten Drehscheibe am ersten Fahrzeugteil eine Deichsel angeordnet, wobei die Deichsel in einem Drehpunkt schwenkbar am ersten Fahrzeugteil angeordnet ist, und wobei der Drehpunkt mit einem Mittelpunkt des ersten Kreisbogenabschnittes der ersten Drehscheibe zusammenfällt. Mit anderen Worten weist die Deichsel vom Drehpunkt beginnend eine Länge auf, die dem Radius der ersten Drehscheibe entspricht. Die Deichsel kann folglich unter der ersten Drehscheibe so verschwenken, dass das Ende der Deichsel um den Drehpunkt herum am Kreisbogenabschnitt der ersten Drehscheibe entlang wandert.

Vorteilhaft befindet sich unterhalb der zweiten Drehscheibe am zweiten Fahrzeugteil ein Koppelelement, das mit dem freien Ende der Deichsel gelenkig verbunden ist. Über die Verbindung zwischen der Deichsel und dem Koppelelement erfolgt die Kopplung der beiden Fahrzeugteile miteinander, wobei durch die gebildete Kopplung die Betriebskräfte zwischen den beiden Fahrzeugteilen übertragen werden können. Zugleich sorgt die Verbindung zwischen der Deichsel und dem Koppelelement dafür, dass die beiden Drehscheiben zueinander geführt bleiben, unabhängig davon, welche seitlichen Versatzbewegungen oder Winkelbewegungen die beiden Fahrzeugteile zueinander ausführen.

Das Koppelelement ist starr am zweiten Fahrzeugteil angeordnet; die gelenkige Verbindung des Koppelelementes bildet mit der Deichsel einen Verbindungspunkt, der mit einem Drehmittelpunkt der zweiten Drehscheibe zusammenfällt. Durch die Lage des Verbindungspunktes zwischen der Deichsel und dem Koppelelement, die sich auf dem ersten Kreisbogenabschnitt beziehungsweise auf dem Innenkonturabschnitt befindet, wird mit der drehbeweglichen Deichsel eine Kinematik ermöglicht, die ein verspannungsfreies Nachführen der Deichsel bei einer Bewegung der Fahrzeugteile zueinander bei gleichzeitigem Versatz der Drehscheiben zueinander ermöglicht.

Das Koppelelement ragt bis an den Scheitelpunkt des Innenkonturabschnittes heran; erfolgt eine Versatzbewegung der Fahrzeugteile zueinander, so lenkt die Deichsel durch eine Verschwenkung um den Drehpunkt aus und der Verbindungspunkt wandert entlang des Kreisbogenabschnittes der ersten Drehscheibe. Die zweite Drehscheibe führt eine Schwenkbewegung um den Verbindungspunkt aus, wobei die drehbewegliche Aufnahme des zweiten Kreisbogenabschnittes der zweiten Drehscheibe in der Kreisbogenaufnahme am zweiten Fahrzeugteil die Bewegung der zweiten Drehscheibe um die erste Drehscheibe herum zulässt.

Es hat sich als weiterhin vorteilhaft herausgestellt, wenn am ersten Kreisbogenabschnitt ein erstes Führungselement angeordnet ist, wobei vorgesehen ist, dass am Innenkonturabschnitt der zweiten Drehscheibe ein zweites Führungselement angeordnet ist, wobei die Führungselemente miteinander verbunden sind. Die Verbindung der Führungselemente ist dabei so ausgebildet, dass diese in Umfangsrichtung des Kreisbogenabschnittes beziehungsweise des Innenkonturabschnittes gegeneinander abgleitend ausgebildet sind. Durch die Führungselemente wird sichergestellt, dass der erste Kreisbogenabschnitt der ersten Drehscheibe in jeder Fahrsituation des Schienenfahrzeugs im Innenkonturabschnitt der zweiten Drehscheibe einsitzt, und einen sicher begehbaren Übergang zwischen der ersten und der zweiten Drehscheibe schafft. Weiterhin besteht vorteilhaft die Möglichkeit, das erste Führungselement am ersten Kreisbogenabschnitt der ersten Drehscheibe mit der Deichsel zu verbinden; das zweite Führungselement kann mit Vorteil mit dem Koppelelement verbunden sein. Dadurch entsteht eine weiterhin erhöhte Stabilität der Drehscheiben über der Deichsel und dem Koppelelement.

Eine Weiterbildung der Verbindungsanordnung sieht vor, dass der zweite Fahrzeugteil einen Querträger aufweist, auf der die Kreisbogenaufnahme angeordnet ist, oder mit der die Kreisbogenaufnahme ausgebildet ist. Dabei weist die Kreisbogenaufnahme auf dem Querträger ausgebildete Gleitaufnahmen auf. Über den Gleitaufnahmen kann die zweite Drehscheibe abgleiten, während diese in der Kreisbogenaufnahme mit dem zweiten Kreisbogenabschnitt geführt verdreht wird.

Nach einer weiteren vorteilhaften Ausgestaltung umfasst die Kreisbogenaufnahme einen sichelförmigen Niederhalter, wobei der zweite Kreisbogenabschnitt der zweiten Drehscheibe zwischen der Oberseite des Querträgers und dem Niederhalter geführt ist. Der Niederhalter ist dabei ebenfalls begehbar und bildet einen möglichst kantenfreien Übergang zur zweiten Drehscheibe. Beispielsweise kann der sichelförmige Niederhalter mit einer Breite ausgeführt sein, sodass der Niederhalter den Kreisbogenabschnitt der zweiten Drehscheibe mit einer Teilbreite überdeckt. Alternativ kann der Niederhalter auch unter der Drehscheibe angeordnet sind; das heißt der Niederhalter unter der Drehscheibe ragt horizontal unter den Querträger. Somit besteht auf der Oberseite kein Absatz oder Stufe.

Auch ist es von Vorteil, wenn die Deichsel eine Aufnahmestruktur mit Aufnahmepunkten aufweist, auf der die zweite Drehscheibe aufliegt. Die erste Drehscheibe ist dabei vorzugsweise starr an einem Querträger des ersten Fahrzeugteils aufgenommen, und kann entsprechend belastet werden. Die Deichsel weist dabei eine Aufnahmestruktur mit entsprechenden Aufnahmepunkten auf, insbesondere in den Außenbereichen der zweiten Drehscheibe, sodass die zweite Drehscheibe unterseitig unterstützt und ebenfalls begehbar ist.

Anhand der Zeichnungen wird die Erfindung nachstehend beispielhaft näher erläutert.
- Figur 1: eine Ansicht der Verbindungsanordnung zwischen zwei Fahrzeugteilen gemäß der Erfindung, wobei die beiden Fahrzeugteile gerade zueinander ausgerichtet sind,
- Figur 2: die Verbindungsanordnung gemäß Figur 1, wobei die beiden Fahrzeugteile einen Winkel zueinander aufweisen,
- Figur 3: die Verbindungsanordnung gemäß Figur 1, wobei die beiden Fahrzeugteile einen seitlichen Versatz zueinander aufweisen und
- Figur 4: eine Unteransicht der Verbindungsanordnung.

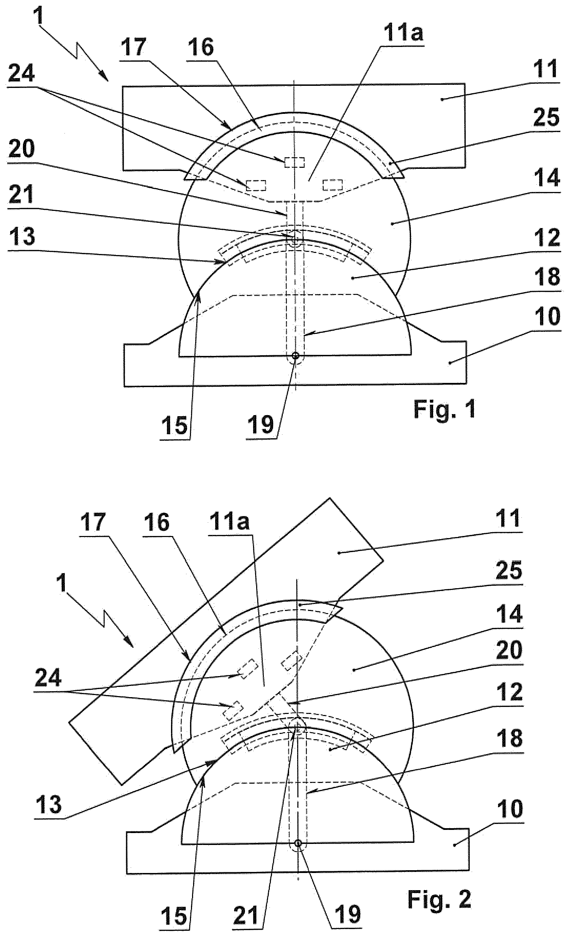

In den Figuren 1, 2 und 3 ist eine Verbindungsanordnung 1 zur Bildung einer begehbaren Verbindung zwischen zwei Fahrzeugteilen 10 und 11 eines Schienenfahrzeuges dargestellt. Die Verbindungsanordnung 1 umfasst eine erste Drehscheibe 12, und die erste Drehscheibe 12 weist eine Halbkreisform mit einem Kreisbogenabschnitt 13 auf. Durch die Halbkreisform ergibt sich ein Kreisbogenabschnitt 13 von 180°, wobei die erste Drehscheibe 12 über eine Grundkante am ersten Fahrzeugteil 10 aufgenommen ist, und wobei sich über der Grundkante der Kreisbogenabschnitt 13 erstreckt. Die erste Drehscheibe 12 ist unbeweglich am ersten Fahrzeugteil 10 angeordnet, wobei sich die Unbeweglichkeit auf eine Drehung der Drehscheibe 12 um eine Hochachse und um eine Längsachse bezieht, beispielsweise kann die Drehscheibe 12 um eine Querachse am ersten Fahrzeugteil 10 kippbar angeordnet sein, insbesondere dann, wenn die beiden Fahrzeugteile 10 und 11 zueinander eine Nickbewegung ausführen.

Die zweite Drehscheibe 14 ist beweglich zwischen dem ersten Kreisbogenabschnitt 13 der ersten Drehscheibe 12 und dem zweiten Fahrzeugteil 11 angeordnet, wobei die zweite Drehscheibe 14 einen Innenkonturabschnitt 15 aufweist, in dem der erste Kreisbogenabschnitt 13 einsitzt, sodass die zweite Drehscheibe 14 um den Kreisbogenabschnitt 13 der ersten Drehscheibe 12 herum führbar ist.

Die zweite Drehscheibe 14 weist einen zweiten Kreisbogenabschnitt 16 auf, wobei der zweite Fahrzeugteil 11 eine Kreisbogenaufnahme 17 aufweist, in der der zweite Kreisbogenabschnitt 16 aufgenommen ist. Die Aufnahme des zweiten Kreisbogenabschnittes 16 in der Kreisbogenaufnahme 17 erfolgt derart, dass die zweite Drehscheibe 14 in der Kreisbogenaufnahme 17 drehbar ist.

Unterhalb der ersten Drehscheibe 12 ist am ersten Fahrzeugteil 10 eine Deichsel 18 angeordnet, wobei die Deichsel 18 in einem Drehpunkt 19 verschwenkbar am ersten Fahrzeugteil 10 angeordnet ist, und wobei der Drehpunkt 19 mit einem Mittelpunkt des ersten Kreisbogenabschnittes 13 der ersten Drehscheibe 12 zusammenfällt. Mit anderen Worten liegt der Drehpunkt 19 der Deichsel 18 mittig auf der Grundkante der ersten Drehscheibe 12. Der Drehpunkt 19 verbindet die Deichsel 18 dabei mit dem ersten Fahrzeugteil 10.

Unterhalb der zweiten Drehscheibe 14 ist am zweiten Fahrzeugteil 11 ein Koppelelement 20 angeordnet, das mit dem freien Ende der Deichsel 18 gelenkig verbunden ist. Das Koppelelement 20 ist dabei starr am zweiten Fahrzeugteil 11 angeordnet, wobei vorgesehen ist, dass die gelenkige Verbindung zur Deichsel 18 einen Verbindungspunkt 21 bildet, der mit einem Drehmittelpunkt der zweiten Drehscheibe 14 zusammenfällt. Der Verbindungspunkt 21 zwischen dem Koppelelement 20 und der Deichsel 18 liegt dabei auf dem ersten Kreisbogenabschnitt 13 der ersten Drehscheibe 12.

Der zweite Fahrzeugteil 11 weist einen Querträger 11a auf, auf der die Kreisbogenaufnahme 17 angeordnet ist, wobei die Kreisbogenaufnahme 17 auf dem Querträger 11a ausgebildete Gleitaufnahmen 24 umfasst. Die Kreisbogenaufnahme 17 bildet weiterhin einen sichelförmigen Niederhalter 25, und der zweite Kreisbogenabschnitt 16 der zweiten Drehscheibe 14 ist zwischen dem Niederhalter 25 und dem Querträger 11a des zweiten Fahrzeugteils 11 haltend aufgenommen. Die Aufnahme erfolgt dabei derart, dass die zweite Drehscheibe 14 um die Hochachse in der Kreisbogenaufnahme 17 verdrehen kann.

Figur 1 zeigt eine Anordnung der beiden Fahrzeugteile 10 und 11 zueinander, in der diese in Längsrichtung zueinander ausgerichtet sind. Eine Auslenkung der Deichsel 18 aus der Längsrichtung erfolgt dabei nicht, und die zweite Drehscheibe 14 sitzt mittig über der ersten Drehscheibe 12 auf; die Deichsel 18 und das Koppelelement 20 erstrecken sich in einer gemeinsamen Längsrichtung.

Figur 2 stellt die Verbindungsanordnung 1 in einer Fahrsituation dar, in der der zweite Fahrzeugteil 11 unter einem Winkel relativ zum ersten Fahrzeugteil 10 verdreht ist. Der Winkel wiederholt sich dabei zwischen der Deichsel 18 und dem Koppelelement 20, wobei eine Auslenkung der Deichsel 18 aus der mittigen Ausrichtung vor dem ersten Fahrzeugteil 10 nicht erfolgt. Aufgrund der weiterhin ausgerichteten Deichsel 18 in Längsrichtung des ersten Fahrzeugteils 10 verdreht der zweite Fahrzeugteil 11 mit der Kreisbogenaufnahme 17 um den zweiten Kreisbogenabschnitt 16 der zweiten Drehscheibe 14, während die zweite Drehscheibe 14 mittig über der ersten Drehscheibe 12 angeordnet bleibt. Eine Verdrehung der Fahrzeugteile 10 und 11 zueinander bewirkt folglich ein Verschwenken des zweiten Fahrzeugteils 11 mit der Kreisbogenaufnahme 17 um die zweite Drehscheibe 14. Zugleich verschwenkt das Koppelelement 20 relativ zur Deichsel 18 im Verbindungspunkt 21.

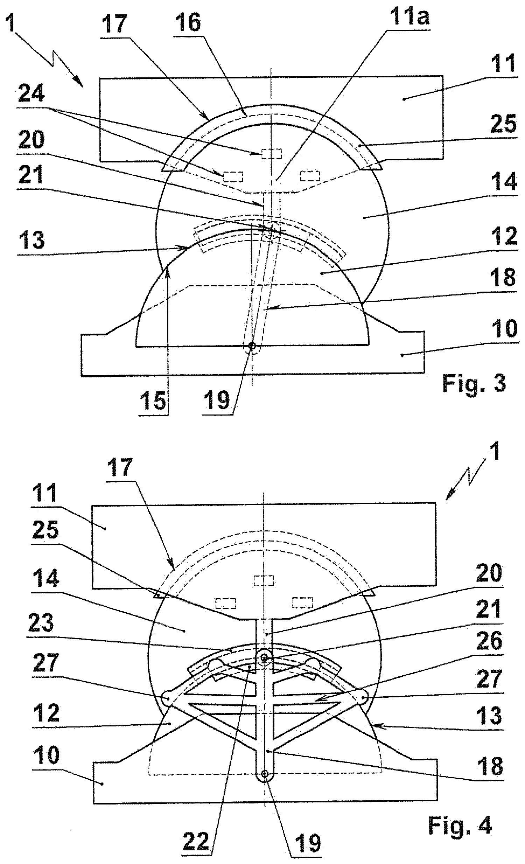

Figur 3 zeigt eine Fahrsituation der beiden Fahrzeugteile 10 und 11 zueinander, in der diese einen seitlichen Versatz aufweisen. Durch den seitlichen Versatz erfolgt eine Verschwenkung der Deichsel 18 um den Drehpunkt 19, in Folge dessen ergibt sich eine Wanderung des Verbindungspunktes 21 zwischen der Deichsel 18 und dem Koppelelement 20 um den ersten Kreisbogenabschnitt 13 herum. Durch die Kinematik ergibt sich ferner eine Verdrehung der zweiten Drehscheibe 14 in der Kreisbogenaufnahme 17.

Selbstverständlich kann auch eine Verschwenkbewegung der beiden Fahrzeugteile 10 und 11, wie in Figur 2 gezeigt, überlagert werden mit einer seitlichen Versatzbewegung, wie in Figur 3 gezeigt.

Figur 4 zeigt eine Unteransicht der Verbindungsanordnung 1 zwischen den beiden Fahrzeugteilen 10 und 11, sodass die erste Drehscheibe 12 und die zweite Drehscheibe 14 jeweils von der Unterseite gezeigt sind. Die Kreisbogenaufnahme 17 der zweiten Drehscheibe 14 am zweiten Fahrzeugteil 11 ist mit dem sichelförmigen Niederhalter 25 endseitig gezeigt. Weiterhin dargestellt sind die Deichsel 18 und das Koppelelement 20, wobei Deichsel 18 und Koppelelement 20 im Verbindungspunkt 21 miteinander verbunden sind.

Die Deichsel 18 ist gemäß dieser Variante mit einer Aufnahmestruktur 26 ausgeführt, und die Aufnahmestruktur 26 bildet mehrere Aufnahmepunkte 27, auf denen die zweite Drehscheibe 14 aufliegen kann.

Weiterhin ist an der ersten Drehscheibe 12 ein erstes Führungselement 22 angeordnet, und an der zweiten Drehscheibe 14 ist ein zweites Führungselement 23 angeordnet. In nicht näher gezeigter Weise kann das erste Führungselement 22 auch mit der Deichsel 18 verbunden sein, und das zweite Führungselement 23 kann mit dem Koppelelement 20 verbunden sein. Die beiden Führungselement 22 und 23 greifen so ineinander, dass das zweite Führungselement 23 in Kreisbogenrichtung des ersten Kreisbogenabschnittes 13 ohne Verlagerung des ersten Führungselementes 22 verlagert werden kann, wobei ein Eingriff der beiden Führungselement 22 und 23 ineinander erhalten bleibt.

### Bezugszeichenliste:

- 1: Verbindungsanordnung

- 10: Fahrzeugsteil
- 11: Fahrzeugsteil
- 11a: Querträger
- 12: erste Drehscheibe
- 13: erster Kreisbogenabschnitt
- 14: zweite Drehscheibe
- 15: Innenkonturabschnitt
- 16: zweiter Kreisbogenabschnitt
- 17: Kreisbogenaufnahme
- 18: Deichsel
- 19: Drehpunkt
- 20: Koppelelement
- 21: Verbindungspunkt
- 22: erstes Führungselement
- 23: zweites Führungselement
- 24: Gleitaufnahme
- 25: Niederhalter
- 26: Aufnahmestruktur
- 27: Aufnahmepunkt

## Patentansprüche

1. Verbindungsanordnung (1) zur Bildung einer begehbaren Verbindung zwischen zwei gelenkig miteinander verbundenen Fahrzeugteilen (10, 11) eines Gelenkfahrzeugs, insbesondere eines Schienenfahrzeugs, wobei erste Drehscheibe (12) mit einem ersten Kreisbogenabschnitt (13) vorgesehen ist und unbeweglich an einem ersten Fahrzeugteil (10) angeordnet ist und **dadurch gekennzeichnet, dass** eine zweite Drescheibe (14) vorgesehen ist, die beweglich zwischen dem ersten Kreisbogenabschnitt (13) der ersten Drehscheibe (12) und dem zweiten Fahrzeugteil (11) angeordnet ist, wobei die zweite Drehscheibe (14) einen Innenkonturabschnitt (15) aufweist, in dem der erste Kreisbogenabschnitt (13) einsitzt, sodass die zweite Drehscheibe (14) um den Kreisbogenabschnitt (13) der ersten Drehscheibe (12) herum führbar ist.

2. Verbindungsanordnung (1) nach Anspruch 1,
**dadurch gekennzeichnet,**
**dass** die zweite Drehscheibe (14) einen zweiten Kreisbogenabschnitt (16) aufweist, wobei der zweite Fahrzeugteil (11) eine Kreisbogenaufnahme (17) aufweist, in dem der zweite Kreisbogenabschnitt (16) aufgenommen ist, derart, dass die zweite Drehscheibe (14) in der Kreisbogenaufnahme (17) drehbar ist.

3. Verbindungsanordnung (1) nach Anspruch 1 oder 2,
**dadurch gekennzeichnet,**
**dass** unterhalb der ersten Drehscheibe (12) am ersten Fahrzeugteil (10) eine Deichsel (18) angeordnet ist, wobei die Deichsel (18) in einem Drehpunkt (19) verschwenkbar am ersten Fahrzeugteil (10) angeordnet ist, und wobei der Drehpunkt (19) mit einem Mittelpunkt des ersten Kreisbogenabschnittes (13) der ersten Drehscheibe (12) zusammenfällt.

4. Verbindungsanordnung (1) nach Anspruch 3,
**dadurch gekennzeichnet,**
**dass** unterhalb der zweiten Drehscheibe (14) am zweiten Fahrzeugteil (11) ein Koppelelement (20) angeordnet ist, das mit dem freien Ende der Deichsel (18) gelenkig verbunden ist.

5. Verbindungsanordnung (1) Anspruch 4,
**dadurch gekennzeichnet,**
**dass** das Koppelelement (20) starr am zweiten Fahrzeugteil (11) angeordnet ist und dass die gelenkige Verbindung zur Deichsel (18) einen Verbindungspunkt (21) bildet, der mit einem Drehmittelpunkt der zweiten Drehscheibe (14) zusammenfällt.

6. Verbindungsanordnung (1) nach einem der vorgenannten Ansprüche,
**dadurch gekennzeichnet,**
**dass** am ersten Kreisbogenabschnitt (13) ein erstes Führungselement (22) angeordnet ist und dass am Innenkonturabschnitt (15) ein zweites Führungselement (23) angeordnet ist, wobei die Führungselemente (22, 23) miteinander verbunden sind.

7. Verbindungsanordnung (1) nach Anspruch 6,
**dadurch gekennzeichnet,**
**dass** die Verbindung der Führungselemente (22, 23) so ausgebildet ist, dass die Führungselemente (22, 23) in Umfangsrichtung des Kreisbogenabschnittes (13) bzw. des Innenkonturabschnitt (15) gegeneinander abgleitend ausgebildet sind.

8. Verbindungsanordnung (1) nach einem der Ansprüche 2 bis 7,
**dadurch gekennzeichnet,**
**dass** der zweite Fahrzeugteil (11) einen Querträger (11a) aufweist, auf der die Kreisbogenaufnahme (17) angeordnet ist, wobei die Kreisbogenaufnahme (17) auf dem Querträger (11a) ausgebildete Gleitaufnahmen (24) aufweist.

9. Verbindungsanordnung (1) nach Anspruch 8,
**dadurch gekennzeichnet,**
**dass** die Kreisbogenaufnahme (17) einen sichelförmigen Niederhalter (25) umfasst, wobei der zweite Kreisbogenabschnitt (16) der zweiten Drehscheibe (14) zwischen der Oberseite des Querträgers (11a) und dem Niederhalter (25) geführt ist.

10. Verbindungsanordnung (1) nach einem der Ansprüche 3 bis 9,
**dadurch gekennzeichnet,**
**dass** die Deichsel (18) eine Aufnahmestruktur (26) mit Aufnahmepunkten (27) aufweist, auf der die zweite Drehscheibe (14) aufliegt.

## Claims

1. A connection arrangement (1) for forming a walkable connection between two articulately connected vehicle parts (10, 11) of an articulated vehicle, in particular a rail vehicle, wherein a first turntable (12) with a first circular arc section (13) is provided and disposed in an immovable manner on a first vehicle part (10) and
**characterized in that**
a second turntable (14) is provided, which is disposed in a movable manner between the first circular arc section (13) of the first turntable (12) and the second vehicle part (11), wherein the second turntable (14) comprises an inner contour section (15) in which the first circular arc section (13) is placed, so that the second turntable (14) can be guided around the circular arc section (13) of the first turntable (12).

2. The connection arrangement (1) according to claim 1,
**characterized in that**
the second turntable (14) comprises a second circular arc section (16), wherein the second vehicle part (11) comprises a circular arc retainer (17), in which the second circular arc section (16) is retained, in such a manner that the second turntable (14) is rotatable inside the circular arc retainer (17).

3. The connection arrangement (1) according to claim 1 or 2,
**characterized in that**
a drawbar (18) is disposed at the first vehicle part (10) below the first turntable (12), wherein the drawbar (18) is pivotably disposed in a pivot point (19) at the first vehicle part (10), and wherein the pivot point (19) coincides with a center point of the first circular arc section (13) of the first turntable (12).

4. The connection arrangement (1) according to claim 3,
**characterized in that**
a coupling element (20), which is articulately connected with the free end of the drawbar (18), is disposed at the second vehicle part (11) under the second turntable (14).

5. The connection arrangement (1) according to claim 4,
**characterized in that**
the coupling element (20) is rigidly disposed at the second vehicle part (11) and that the articulated connection with the drawbar (18) forms a connection point (21), which coincides with the rotation center of the second turntable (14).

6. The connection arrangement (1) according to one of the aforementioned claims,
**characterized in that**
a first guide element (22) is disposed at the first circular arc section (13) and that a second guide element (23) is disposed at the inner contour section (15), wherein the guide elements (22, 23) are connected with each other.

7. The connection arrangement (1) according to claim 6,
**characterized in that**
the connection of the guide elements (22, 23) is formed in such a manner that the guide elements (22, 23) are formed so that they glide against each other in the circumferential direction of the circular arc section (13) or of the inner contour section (15).

8. The connection arrangement (1) according to one of the claims 2 to 7,
**characterized in that**
the second vehicle part (11) comprises a cross beam (11a), on which the circular arc retainer (17) is disposed, wherein the circular arc retainer (17) comprises gliding retainers (24) formed on the cross beam (11a).

9. The connection arrangement (1) according to claim 8,
**characterized in that**
the circular arc retainer (17) comprises a sickle-shaped downholder (25), wherein the second circular arc section (16) of the second turntable (14) is guided between the upper side of the cross beam (11a) and the downholder (25).

10. The connection arrangement (1) according to one of the claims 3 to 9,
**characterized in that**
the drawbar (18) comprises a retaining structure (26) with retaining points (27), on which the second turntable (14) rests.

## Revendications

1. Dispositif de raccordement (1) pour former une liaison accessible entre deux parties de véhicule (10, 11) d'un véhicule articulé qui sont reliées entre elles de façon articulée, en particulier d'un véhicule ferroviaire, dans lequel est fournie une première plaque tournante (12) avec une première section en arc de cercle (13), disposée de manière fixe au niveau d'une première partie de véhicule (10), et
**caractérisé en ce que**
une seconde plaque tournante (14) est fournie qui est disposée de manière mobile entre la première section en arc de cercle (13) de la première plaque tournante (12) et la seconde partie de véhicule (11), où la seconde plaque tournante (14) comporte une section de contour intérieur (15) dans laquelle est placée la première section en arc de cercle (13), de sorte que la seconde plaque tournante (14) peut être menée autour de la section en arc de cercle (13) de la première plaque tournante (12).

2. Dispositif de raccordement (1) selon la revendication 1,
**caractérisé en ce que**
la seconde plaque tournante (14) comporte une deuxième section en arc de cercle (16), où la seconde partie de véhicule (11) comporte un logement en arc de cercle (17) dans lequel est reçu la seconde section en arc de cercle (16) de telle manière que la seconde plaque tournante (14) peut tourner dans le logement en arc de cercle (17).

3. Dispositif de raccordement (1) selon la revendication 1 ou 2,
**caractérisé en ce que**
un timon (18) est disposé sous la première plaque tournante (12) au niveau de la première partie de véhicule (10), où le timon (18) est disposé de manière pivotante en un centre de rotation (19) au niveau de la première partie de véhicule (10), et où le centre de rotation (19) coïncide avec un centre de la première section en arc de cercle (13) de la première plaque tournante (12).

4. Dispositif de raccordement (1) selon la revendication 3,
**caractérisé en ce que**
un élément de couplage (20), qui est raccordé de manière articulée avec l'extrémité libre du timon (18), est disposé sous la seconde plaque tournante (14) au niveau de la seconde partie de véhicule (11).

5. Dispositif de raccordement (1) selon la revendication 4,
**caractérisé en ce que**
l'élément de couplage (20) est disposé de manière rigide au niveau de la seconde partie de véhicule (11) et que la liaison articulée avec le timon (18) forme un point de raccordement (21) qui coïncide avec un centre de rotation de la seconde plaque tournante (14).

6. Dispositif de raccordement (1) selon l'une des revendications précédentes,
**caractérisé en ce que**
un premier élément de guidage (22) est disposé au niveau de la première section en arc de cercle (13) et qu'un second élément de guidage (23) est disposé au niveau de la section de contour intérieure (15), les éléments de guidage (22, 23) étant reliés entre eux.

7. Dispositif de raccordement (1) selon la revendication 6,
**caractérisé en ce que**
la liaison des éléments de guidage (22, 23) est réalisée de telle manière que les éléments de guidage (22, 23) coulissent l'un contre l'autre dans la direction circonférentielle de la section en arc de cercle (13), respectivement de la section de contour intérieur (15).

8. Dispositif de raccordement (1) selon l'une des revendications 2 à 7,
**caractérisé en ce que**
la seconde partie de véhicule (11) comporte une traverse (11a) sur laquelle est disposée le logement en arc de cercle (17), où le logement en arc de cercle (17) comporte des logements coulissant (24) formés sur la traverse (11a).

9. Dispositif de raccordement (1) selon la revendication 8,
**caractérisé en ce que**
le logement en arc de cercle (17) comprend un élément de maintien (25) en forme de faucille, où la seconde section en arc de cercle (16) de la seconde plaque tournante (14) est guidée entre le côté supérieur de la traverse (11a) et l'élément de maintien (25).

10. Dispositif de raccordement (1) selon l'une des revendications 3 à 9,
**caractérisé en ce que**
le timon (18) comporte une structure de réception (26) avec des points de réception (27) sur laquelle repose la seconde plaque tournante (14).
